# EUROPÄISCHE PATENTSCHRIFT

(11) **EP 0 930 196 B1**
(45) Veröffentlichungstag und Bekanntmachung des Hinweises auf die Patenterteilung: **03.07.2002**
(21) Anmeldenummer: 98122020.5
(22) Anmeldetag: 20.11.1998
(51) Int. Cl.: B60N 2/44, A47C 7/28

(54) **Federmatte für Kraftfahrzeugsitze**
Spring base for vehicle seat
Nappe élastique pour siège de véhicule

(30) Priorität: 13.01.1998 DE 19800869
(43) Veröffentlichungstag der Anmeldung: 21.07.1999
(73) Patentinhaber: Faurecia Autositze GmbH & Co. KG, 31655 Stadthagen (DE)
(72) Erfinder: Strasser, Dieter, 31655 Stadthagen (DE)
(74) Vertreter: Seewald, Jürgen, Dipl.-Ing.

(56) Entgegenhaltungen:
- EP-A- 0 130 157
- DE-A- 2 238 216
- DE-A- 4 320 382
- GB-A- 1 599 635
- US-A- 4 364 547

## Beschreibung

Die vorliegende Erfindung betrifft eine Federmatte für Kraftfahrzeugsitze, bestehend aus seitlichen Laufdrähten und diese verbindenden Schußdrähten, wobei die Federmatte mittels Zugfedern in einem Rahmen aufgehängt ist, und die Laufdrähte jeweils zwischen zwei Schußdrähten zum Einhängen von Zugfedern eine nach außen gerichtete Einhängesicke aufweisen.

Federmatten für Kraftfahrzeugsitze werden als fortlaufendes Band hergestellt und entsprechend den Vorgaben der jeweiligen Sitzhersteller in den gewünschten Längen abgelängt. Eine derartige Federmatte ist beispielsweise in der DE-AS 22 38 216 offenbart. Sie besteht aus zwei äußeren Laufdrähten, die durch Schußdrähte miteinander verbunden sind. Die Federmatte ist mittels Zugfedern in einen sie umgebenden Rahmen eingehängt. Diese Zugfedern besitzen hakenförmige Enden, die in den Rahmen bzw. in die Laufdrähte der Federmatte eingehängt sind. Um Geräusche zwischen den metallenen, hakenförmigen Enden der Zugfedern und den Laufdrähten zu vermeiden, sind letztere mit Papier umwickelt oder plastikbeschichtet.

Nach dem aus der oben schon genannten DE-AS 22 38 216 hervorgehenden Stand der Technik sind die Zugfedern jeweils zwischen zwei Schußdrähten in die durchgehend geraden Laufdrähte eingehängt. Diese Art der Einhängung führt dazu, daß die Federenden bei in Gebrauch befindlichem Kraftfahrzeugsitz verrutschen und in Anlage mit einem der benachbarten, an den Laufdraht angeklammerten Schußdrähte gelangen. Die Schußdrähte sind wegen dem damit verbundenen Aufwand nicht ummantelt, so daß es bei Berührung mit den Federenden dennoch zu nicht gewollten Quietschgeräuschen kommt. Um dies zu vermeiden, ist es von praktischen Anwendungen her bekannt, die Laufdrähte am Einhängeort einer Zugfeder mit einer nach außen gerichteten Einhängesicke zu versehen, in die das Ende einer Zugfeder eingehängt wird. Diese Sicken verhindern ein Verrutschen der Zugfedern auf den Laufdrähten, so daß Geräuschbildungen vermieden werden.

Die Einhängesicken für die Zugfedern werden im Zuge der Herstellung der Federmatten nach dem Verklammern der Schußdrähte mit den Laufdrähten in letztere eingebracht. Die Laufdrähte erfahren dadurch in ihren an die Einhängesicken angrenzenden Bereichen eine Verformung nach innen, d.h. der Abstand zwischen den Laufdrähten verringert sich in den den Einhängesicken benachbarten Bereichen. Dies führt dazu, daß die dort mit den Laufdrähten verklammerten Schußdrähte durchhängen. Daraus resultiert eine unbefriedigende Auflagefläche für die an die Federmatte anliegende Schaumgummiauflage und damit eine Verschlechterung des Sitzkomforts.

Dieser Nachteil könnte dadurch vermieden werden, daß die Schußdrähte erst nach dem Einbringen der Einhängesicken mit den Laufdrähten verklammert werden. Ein derartiges Vorgehen ist aber mit der automatischen Herstellung der Federmatte als fortlaufendes Band unvereinbar.

Aufgabe der vorliegenden Erfindung ist es, für eine Federmatte der eingangs genannten Art eine einfache Lösung zur Verfügung zu stellen, die das Durchhängen von Schußdrähten vermeidet. Gelöst wird diese Aufgabe bei einer derartigen Federmatte dadurch, daß zwischen den beiden jeweiligen Schußdrähten beidseitig von jeder Einhängesicke eine nach innen gerichtete Gegensicke in den Laufdraht eingebracht ist.

Aufgrund der erfindungsgemäßen Lösung wird die aus den Einhängesicken resultierende Verformung der Laufdrähte nach innen auf einfache Weise kompensiert. Hierzu kann die ohnehin schon vorhandene Technik zum Einbringen der Einhängesicken genutzt werden, indem in die Vorrichtung entsprechende Gegenwerkzeuge eingebaut werden. Ein zusätzlicher Arbeitsschritt ist daher nicht erforderlich. Die Gegensicken gewährleisten eine straffe Anordnung der Schußdrähte im Bereich der Einhängepunkte der Zugfedern, so daß die Federmatten eine im wesentlichen durchgängig gleichmäßige Anlagefläche für eine anliegende Schaumgummiauflage bilden. Der Sitzkomfort wird dadurch bei gleichzeitiger Vermeidung von Quietschgeräuschen verbessert.

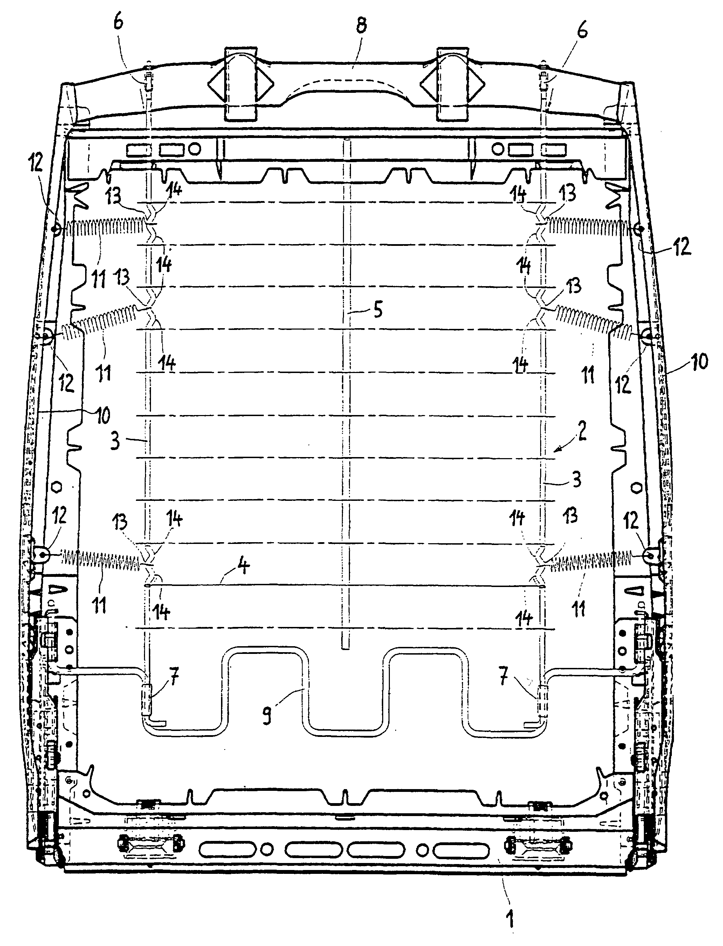

Die Erfindung wird nachstehend anhand eines Ausführungsbeispiels näher erläutert. Die dazugehörige Zeichnung zeigt in ihrer einzigen Figur eine Draufsicht auf einen Rückenlehnen-Rahmen 1 mit eingehängter Federmatte 2.

Die Federmatte 2 besteht aus zwei seitlichen, kunststoffummantelten Laufdrähten 3, zwischen denen im wesentlichen rechtwinklig dazu Schußdrähte 4 verlaufen. Diese Schußdrähte 4 sind parallel zueinander und in etwa gleichen Abständen voneinander angeordnet. In der Zeichnung ist lediglich der mit dem Bezugszeichen 4 gekennzeichnete Schußdraht körperlich eingezeichnet. Aus dieser Darstellung geht hervor, daß die Enden dieses Schußdrahtes 4 mit den Laufdrähten 3 verklammert sind. Diese Verklammerungen sind selbstverständlich auch zwischen den Laufdrähten 3 und den anderen, zur Vereinfachung nur als Strichlinien dargestellten Schußdrähten 4 vorhanden. Etwa mittig zwischen den Laufdrähten 3 ist ein relativ weiches Kunststoffrohr 5 angeordnet, welches von den Schußdrähten 4 durchsetzt ist und als Abstandhalter für diese dient.

Die Enden der Laufdrähte 3 sind mittels Klammern 6, 7 am Querholm 8 des Rückenlehnen-Rahmens 1 bzw. an einer als Lordosen-Stütze dienenden Fowi-Feder 9 befestigt. Die Fowi-Feder 9 ist ihrerseits an ihren Enden mit den Seitenholmen 10 des Rückenlehnen-Rahmens 1 verklammert.

Zur seitlichen, federnden Abstützung der Federmatte 2 sind Zugfedern 11 vorgesehen, die zwischen den Laufdrähten 3 und den Seitenholmen 10 des Rückenlehnen-Rahmens 1 verspannt sind. Diese Zugfedern 11 besitzen hakenförmige Enden, die auf der einen Seite in an den Seitenholmen 10 vorgesehene Ösen 12 und auf der anderen Seite in nach außen gerichtete, in die Laufdrähte 3 eingebrachte Einhängesicken 13 eingehängt sind. Die Einhängesicken 13 verhindern ein Verrutschen der Federn 11 auf den Laufdrähten 3. Sie sind jeweils mittig zwischen zwei Schußdrähten 4 angeordnet. Unmittelbar anschließend an jede Einhängesicke 13 ist beidseitig von dieser eine nach innen gerichtete Gegensicke 14 in den Laufdrähten 3 ausgebildet. Diese Gegensicken 14 sind in den zwischen zwei benachbarten Schußdrähten 4 liegenden Abschnitten der Laufdrähte 3 angeordnet, in denen auch eine Einhängesicke 13 vorgesehen ist. Dadurch wird die durch die Einhängesicken 13 verursachte Biegung der Laufdrähte 3 nach innen aufgehoben. Dies hat zur Folge, daß die mit den Laufdrähten 3 verklammerten Schußdrähte 4 im Bereich der Einhängesicken 13 nicht mehr durchhängen.

## Patentansprüche

1. Federmatte (2) für Kraftahrzeugsitze, bestehend aus seitlichen Laufdrähten (3) und diese verbindenden Schußdrähten (4), wobei die Federmatte (2) mittels Zugfedern (11) in einem Rahmen (1) aufgehängt ist, und die Laufdrähte (3) jeweils zwischen zwei Schußdrähten (4) zum Einhängen von Zugfedern (11) eine nach außen gerichtete Einhängesicke (13) aufweisen, **dadurch gekennzeichnet, daß** zwischen den beiden jeweiligen Schußdrähten (4) beidseitig von jeder Einhängesicke (13) eine nach innen gerichtete Gegensicke (14) in den Laufdraht (3) eingebracht ist.

## Claims

1. Sprung matting for vehicle seats, consisting of lateral carrier wires and weft wires joining them, in which the sprung matting is suspended in a frame and each of the carrier wires has a attachment crimp pointing outwards between two weft wires for attaching tension springs, **characterised in that** between both of the respective running wires (4) a reverse crimp (14) is incorporated into the running wire (3) on both sides of each attachment crimp (13)

## Revendications

1. Mat à ressorts (2) pour sièges de véhicule, constitué de fils de chaîne latéraux (3) reliés entre eux par des fils de trames (4), le mat à ressorts (2) étant suspendu au moyen de ressorts de traction (11) dans un cadre (1) et les fils de chaîne (3) présentant respectivement, entre deux fils de trame (4), une moulure de suspension (13) toumée vers l'extérieur pour la suspension de ressorts de traction (11), **caractérisé en ce qu**'entre les deux fils de chaîne (4) respectifs, une contre-moulure (14) tournée vers l'intérieur est réalisée dans le fil de chaîne (3), de part et d'autre de chaque moulure de suspension (13).
